(19) Europäisches Patentamt
European Patent Office
Office européen des brevets

(11) **EP 4 039 762 A1**

(12) **EUROPEAN PATENT APPLICATION**
published in accordance with Art. 153(4) EPC

(43) Date of publication:
**10.08.2022 Bulletin 2022/32**

(21) Application number: **20872571.3**

(22) Date of filing: **28.09.2020**

(51) International Patent Classification (IPC):
***C09J 7/21*** *(2018.01)*          ***C09J 7/38*** *(2018.01)*

(52) Cooperative Patent Classification (CPC):
**C09J 7/21; C09J 7/38**

(86) International application number:
**PCT/JP2020/036739**

(87) International publication number:
**WO 2021/065836 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019   JP 2019179184**

(71) Applicant: **NITTO DENKO CORPORATION**
**Ibaraki-shi**
**Osaka 567-8680 (JP)**

(72) Inventors:
• **TAKASHIMA Atsushi**
 **Ibaraki-shi, Osaka 567-8680 (JP)**
• **MIZUHARA Ginji**
 **Ibaraki-shi, Osaka 567-8680 (JP)**
• **MORISHITA Hiromitsu**
 **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **STRING-LIKE ADHESIVE BODY**

(57) The present invention relates to a threadlike adhesive body including a threadlike core material and an adhesive layer configured to cover a surface of the core material in a longitudinal direction, in which the adhesive layer contains a non-biomass-derived component, the core material contains a biomass-derived component, and a difference ($\theta_0 - \theta_{30}$) between a contact angle $\theta_0$ of water in an amount of 2 $\mu$l measured immediately after the water drops onto the core material and a contact angle $\theta_{30}$ of the water measured after 30 seconds have elapsed from the dropping is 20° or less.

## FIG. 1

EP 4 039 762 A1

**Description**

TECHNICAL FIELD

The present invention relates to a threadlike adhesive body.

BACKGROUND ART

At the time of bonding articles, an adhesive body including a substrate and an adhesive layer may be used due to a demand for preventing dripping or the like. In particular, as an adhesive body capable of making width of an adhesion region reducing and making shape of an adhesion region complicated, a threadlike adhesive body, in which an adhesive layer is formed on a circumferential surface of a threadlike core material has been known (e.g., Patent Literature 1).

CITATION LIST

PATENT LITERATURE

Patent Literature 1: JP-A-H3-231980

SUMMARY OF INVENTION

TECHNICAL PROBLEM

In recent years, reduction in an environmental load has been strongly demanded in order to realize a sustainable society, and an improvement in biomass degree has also been demanded for a threadlike adhesive body.
Here, as a method for improving the biomass degree of the threadlike adhesive body, a method for improving the biomass degree of a core material and a method for improving the biomass degree of an adhesive layer have been considered. However, when the biomass degree of the adhesive layer is improved, the adhesive strength may decrease and the manufacturing cost may increase. Therefore, in order to improve the biomass degree of the threadlike adhesive body, it is particularly desired to improve the biomass degree of the core material.
Patent Literature 1 discloses that a cotton yarn, which is a biomass material, is used as a core material.
However, when a cotton yarn is used as a core material, it is required to use a large amount of adhesive in order to exhibit a sufficient adhesive strength, and thus it has become clear from the study of the present inventors that the biomass degree cannot be sufficiently improved.
The present invention has been made in view of the above, and an object of the present invention is to provide a threadlike adhesive body with a reduced environmental load.

SOLUTION TO PROBLEM

A threadlike adhesive body of the present invention for solving the above problems includes a threadlike core material and an adhesive layer configured to cover a surface of the core material in a longitudinal direction, in which the adhesive layer contains a non-biomass-derived component, the core material contains a biomass-derived component, and a difference ($\theta_0 - \theta_{30}$) between a contact angle $\theta_0$ of water in an amount of 2 $\mu$l measured immediately after the water drops onto the core material and a contact angle $\theta_{30}$ of the water measured after 30 seconds have elapsed from the dropping is 20° or less.
According to one aspect of the threadlike adhesive body of the present invention, the core material may be a multifilament yarn.
According to another aspect of the threadlike adhesive body of the present invention, the multifilament yarn may contain a filament which does not contain a biomass-derived component.
According to still another aspect of the threadlike adhesive body of the present invention, the multifilament yarn may be twisted.

ADVANTAGEOUS EFFECTS OF INVENTION

The threadlike adhesive body of the present invention has a reduced environmental load.

BRIEF DESCRIPTION OF DRAWINGS

FIG. 1 is a cross-sectional view of a cross section perpendicular to a longitudinal direction of a threadlike adhesive body according to an embodiment of the present invention.
FIG. 2 is a schematic diagram for illustrating a method for measuring $\theta_0$ and $\theta_{30}$.

DESCRIPTION OF EMBODIMENTS

Hereinafter, an embodiment of a threadlike adhesive body of the present invention will be described in detail. The present invention is not limited to the embodiment to be described below. In the drawings, members and parts having the same functions may be denoted by the same reference numerals, and duplicate descriptions may be omitted or simplified. The drawings of the embodiment are schematically described for the purpose of clearly illustrating the present invention, and do not necessarily accurately represent a size or scale of an actual product.

[Threadlike adhesive Body]

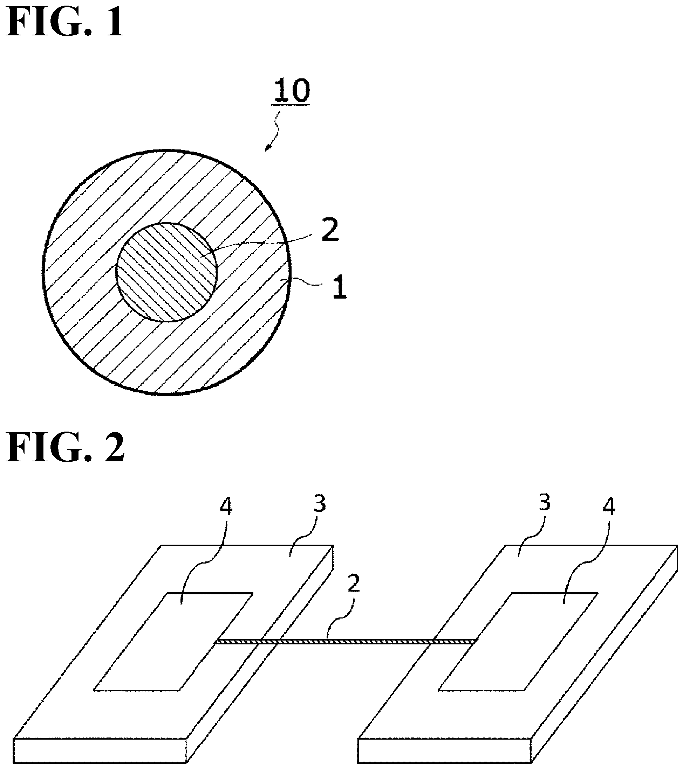

FIG. 1 is a cross-sectional view of a cross section perpendicular to a longitudinal direction of a threadlike adhesive body 10 according to an embodiment of the present invention.
The threadlike adhesive body 10 of the present embodiment is a threadlike adhesive body including a threadlike core material 2 and an adhesive layer 1 for covering a surface of the core material 2 in a longitudinal direction.
In the present embodiment, the adhesive layer contains a non-biomass-derived component, and the core material contains a biomass-derived component.
In the present embodiment, a difference ($\theta_0$ - $\theta_{30}$) between a contact angle $\theta_0$ of water in an amount of 2 $\mu$l measured immediately after the water drops onto the core material and a contact angle $\theta_{30}$ of the water measured after 30 seconds have elapsed from the dropping is 20° or less.
The threadlike shape in the present description means a shape in which a length in the longitudinal direction is sufficiently long with respect to a length in the width direction, and a ratio (long axis/short axis) of a length of a long axis (the longest axis among the axes passing through the center of gravity of a cross-sectional shape) to a length of a short axis (the shortest axis among the axes passing through the center of gravity of the cross-sectional shape) in the shape of a cross section perpendicular to the longitudinal direction (hereinafter, also referred to as "cross-sectional shape") is, for example, 200 or less, preferably 100 or less, more preferably 50 or less, still more preferably 10 or less, yet still more preferably 5 or less, and particularly preferably 3 or less. Further, the threadlike shape means a state in which the threadlike adhesive body can be bent in various directions and angles like a yarn.
In the present description, the biomass-derived component refers to a component derived from a renewable organic resource. Typically, the biomass-derived component refers to a component derived from biological resources that can be continuously reproduced in the presence of sunlight, water and carbon dioxide. Therefore, components derived from fossil resources (fossil resource-based materials) that are depleted by use after mining are excluded. For example, the plant-derived component is a biomass-derived component.
A non-biomass-derived component refers to a component other than the biomass-derived component.
The biomass degree of the threadlike adhesive body refers to a ratio of the mass of the biomass-derived component contained in the threadlike adhesive body to the total mass of the threadlike adhesive body, and is calculated by the following equation. The biomass degrees of the core material and the adhesive are similar to the biomass degree of the threadlike adhesive body, and each of the biomass degrees is calculated by the following equation.

$$\text{Biomass degree [\%] of threadlike adhesive body} = 100 \times (\text{mass [g] of biomass-derived component contained in threadlike adhesive body})/(\text{total mass [g] of threadlike adhesive body})$$

$$\text{Biomass degree [\%] of core material} = 100 \times (\text{mass [g] of biomass-derived component contained in core material})/(\text{total mass [g] of core material})$$

$$\text{Biomass degree [\%] of adhesive} = 100 \times \text{(mass [g] of biomass-derived component contained in adhesive)/(total mass [g] of adhesive)}$$

The biomass degree may also be measured in accordance with ASTM D6866-18, for example.

The present inventors have conducted studies and found that, when a cotton yarn is used as a core material in a threadlike adhesive body, the adhesive permeates and adheres not only to an outer circumferential surface of the core material where the adhesive contributes to adhesiveness, but also to an inside of the core material, and thus it is required to use a large amount of adhesive in order to exhibit sufficient adhesive strength. From the above findings, the present inventors have found that by forming a threadlike adhesive body using a core material which contains a biomass-derived component and into which an adhesive is less likely to permeate, a sufficient adhesive strength can be exhibited with a small amount of the adhesive used, and a high biomass degree can be easily obtained.

An example of an index for evaluating the ease of permeation of the adhesive into the core material includes a difference ($\theta_0 - \theta_{30}$) between a contact angle $\theta_0$ of water in an amount of 2 μl measured immediately after the water drops onto the core material and a contact angle $\theta_{30}$ of the water measured after 30 seconds have elapsed from the dropping. As the contact angle difference is increased, the adhesive is more likely to permeate into the core material, and therefore, a large amount of adhesive is required to ensure sufficient adhesive strength, which makes it difficult to improve the biomass degree.

Therefore, the contact angle difference ($\theta_0 - \theta_{30}$) is 20° or less, preferably 15° or less, more preferably 10° or less, and still more preferably 5° or less. The lower limit of the contact angle difference ($\theta_0 - \theta_{30}$) is not particularly limited, and may be 0°. The detailed conditions of the method for measuring the contact angle difference are described in the section of Examples.

The contact angle difference ($\theta_0 - \theta_{30}$) may be controlled, for example, by appropriately changing a material of the core material. In general, in the case where the core material contains a large amount of short fibers, a large amount of fibrils, or a large amount of air, the contact angle difference ($\theta_0 - \theta_{30}$) tends to be increased. Therefore, for example, when a yarn containing a large amount of long fibers or a yarn containing a small amount of fibrils is adopted as the material of the core material, or when the core material is twisted, the contact angle difference tends to be decreased.

The biomass degree of the threadlike adhesive body is preferably 10% or more, more preferably 25% or more, still more preferably 35% or more, even more preferably 50% or more, yet still more preferably 70% or more, yet even more preferably 90% or more, and most preferably 100%, from the viewpoint of reducing an environmental load. The biomass degree of the threadlike adhesive body can be adjusted by adjusting the biomass degree of the core material and/or the adhesive layer.

On the other hand, when the biomass degree of the core material or the adhesive layer is excessively improved to improve the biomass degree of the threadlike adhesive body, there is a concern that problems such as a decrease in strength and flexibility, a decrease in adhesive strength, and an increase in manufacturing cost may be caused. Therefore, the biomass degree of the threadlike adhesive body is preferably 95% or less, more preferably 90% or less, and still more preferably 80% or less.

The form and materials are not particularly limited as long as the core material is threadlike and contains a biomass-derived component, and the contact angle difference ($\theta_0 - \theta_{30}$) is 20° or less. The form and materials may be appropriately adjusted in accordance with required properties such as strength, mass, and hardness.

The cross-sectional shape of the core material is typically circular, and may be various shapes such as an elliptical shape and a polygonal shape in addition to the circular shape.

The thickness of the core material is not particularly limited, and may be appropriately adjusted together with the thickness of the adhesive layer so that the thickness of the threadlike adhesive body is appropriate depending on its use. For example, the thickness of the threadlike adhesive body is set to 5 to 3,000 μm.

The core material in the threadlike adhesive body may be a monofilament composed of a single filament, may be a multifilament yarn composed of a plurality of filaments, may be a spun yarn, may be a processed yarn generally referred to as a textured yarn, a bulky yarn or a stretch yarn, which is subjected to crimping, bulking, or the like, may be a hollow yarn, or may be a yarn obtained by combining these yarns by twisting them or the like.

When the core material is a multifilament yarn, all the filaments constituting the multifilament yarn may contain a biomass-derived component, and only a part of the filaments may contain a biomass-derived component, and the other filaments may not contain a biomass-derived component. It is possible to easily adjust various characteristics, such as the biomass degree, the difficulty in permeation of the adhesive, and the strength, by adjusting a ratio of the number of the filaments containing the biomass-derived component to the total number of the filaments constituting the multifilament yarn.

Although a yarn containing a biomass-derived component tends to have low flexibility, the fineness of each filament constituting the multifilament yarn is reduced, and the flexibility is improved when a multifilament yarn is used as the core material. Therefore, the multifilament yarn is preferred also from the viewpoint of improving the flexibility.

The number of filaments constituting the multifilament yarn is not particularly limited, and may be appropriately adjusted in accordance with the intended use and desired characteristics of the threadlike adhesive body. The number is, for example, preferably 4 or more, more preferably 10 or more, still more preferably 15 or more, and particularly preferably 20 or more. In addition, the number is preferably 300 or less.

The multifilament yarn may be a twisted yarn that is twisted, or may be a non-twisted yarn that is not twisted. In order to further prevent the permeation of the adhesive into the core material, the core material is preferably a twisted multifilament yarn. The number of twists in the case of twisting the multifilament yarn is not particularly limited and may be above 0 twist/m. The number of twists is preferably 30 twists/m or more, more preferably 60 twists/m or more, and still more preferably 90 twists/m or more. On the other hand, when the number of twists is too large, the flexibility of the threadlike adhesive body may be impaired. Therefore, the number of twists is preferably 3,000 twists/m or less, more preferably 1,500 twists/m or less, still more preferably 800 twists/m or less, and particularly preferably 250 twists/m or less.

The materials constituting the core material are not particularly limited as long as the core material contains a biomass-derived component and the contact angle difference ($\theta_0 - \theta_{30}$) described above is 20° or less. The materials may be appropriately selected in accordance with the desired biomass degree, strength, mass, hardness, and the like.

Examples of a material containing a biomass-derived component include natural fibers. Examples of the natural fibers include plant fibers such as hemp and animal fibers such as silk and wool.

Examples of the material containing a biomass-derived component include biomass plastics. The biomass plastics are roughly classified into plastics composed of biomass-derived components and plastics composed of biomass-derived components and fossil-resource-derived components.

Examples of biomass plastics composed of biomass-derived components include polylactic acid, polyethylene (bioPE), nylon 11 (bioPA11), nylon 1010 (bioPA1010), and polyesters (bioPEs) such as polyethylene terephthalate (bioPET).

Examples of biomass plastics composed of biomass-derived components and fossil-resource-derived components include polyethylene terephthalate (bioPET), polybutylene succinate (bioPBS), polybutylene terephthalate succinate, polyamides 610, 410, 510, 1012, 10T, 11T, MXD10 (bioPA 610, 410, 510, 1012, 10T, 11T, MXD10), polycarbonate (bioPC), polyurethane (bioPU), an aromatic polyester, an unsaturated polyester, a phenol resin, an epoxy resin, a polylactic acid blend/PBAT, and a starch blend/polyester resin, which contain biomass-derived components.

From the viewpoint of making it difficult for the adhesive to permeate into the core material, polyesters or polyethylene, which is difficult to be impregnated with moisture, is particularly preferred.

From the viewpoint of reducing the environmental load, the biomass degree of the core material is preferably 25% or more, more preferably 50% or more, still more preferably 70% or more, and most preferably 100%.

On the other hand, when the biomass degree of the core material is excessively increased, there is a concern that problems such as a decrease in strength and flexibility, a decrease in adhesive strength, and an increase in manufacturing cost may be caused. Therefore, the biomass degree of the core material is preferably 95% or less, more preferably 80% or less, and still more preferably 70% or less.

The core material may contain various additives such as a filler (an inorganic filler, an organic filler or the like), an anti-aging agent, an antioxidant, an ultraviolet absorber, an antistatic agent, a lubricant, a plasticizer, and a colorant (a pigment, a dye, or the like) as necessary. The known or common surface treatment such as a corona discharge treatment, a plasma treatment or application of an undercoat agent may be performed on the surface of the core material.

In the threadlike adhesive body including the core material, the entire circumferential surface of the core material is not necessarily covered with the adhesive layer, and a part not including an adhesive layer may be included as long as the effect of the present invention is exhibited. The end surface of the core material may or may not be covered with the adhesive layer. For example, when the adhesive body is cut during a producing process or during use, the end surface of the core material may not be covered with the adhesive layer.

The adhesive layer can be obtained, for example, by applying an adhesive composition to a surface of a core material by dipping, immersion, coating, or the like, and heating and drying as necessary. The adhesive composition can be applied by using a conventional coater such as a gravure roll coater, a reverse roll coater, a kiss roll coater, a dip roll coater, a bar coater, a knife coater, and a spray coater.

The kind of the adhesive composition is not particularly limited as long as it includes a non-biomass material. For example, an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive can be used. Among them, the rubber-based adhesive and the acrylic adhesive are preferred, and the acrylic adhesive is particularly preferred, from the viewpoint of adhesiveness. One kind of the adhesive composition may be used alone, or two or more kinds thereof may be used in combination.

The acrylic adhesive contains, as a main component, a polymer of monomers that mainly contain an alkyl (meth)acrylate such as ethyl acrylate, butyl acrylate, 2-ethylhexyl acrylate, isooctyl acrylate, and isononyl acrylate, and is obtained by adding remodeling monomers, such as acrylonitrile, vinyl acetate, styrene, methyl methacrylate, acrylic acid, maleic anhydride, vinylpyrrolidone, glycidyl methacrylate, dimethylaminoethyl methacrylate, hydroxyethyl acrylate, and acrylamide, to these alkyl (meth)acrylates as necessary.

The rubber-based adhesive contains, as a main component, a rubber-based polymer such as natural rubber, a styrene-isoprene-styrene block copolymer, a styrene-butadiene-styrene block copolymer, a styrene-ethylene-butylene-styrene block copolymer, a styrene-butadiene rubber, polybutadiene, polyisoprene, polyisobutylene, butyl rubber, chloroprene rubber, and silicone rubber.

These adhesive compositions may be appropriately blended with adhesive-imparting resins such as rosin-based one, terpene-based one, styrene-based one, aliphatic petroleum-based one, aromatic petroleum-based one, xylene-based one, phenol-based one, coumarone indene-based one, and hydrogenated additives thereof, and various additives such as a cross-linking agent, a viscosity modifier (thickener), a leveling agent, a release modifier, a plasticizer, a softener, a filler, a coloring agent (pigments, dyes, or the like), a surfactant, an antistatic agent, a preservative, an age resister, a UV absorber, an antioxidant, and a light stabilizer.

The adhesive composition may also contain a biomass-derived component. However, when the biomass degree of the adhesive composition is too high, the adhesive strength may be reduced and the production cost may be increased. Therefore, the biomass degree of the adhesive layer is smaller than the biomass degree of the core material.

As the adhesive, either type of a solvent type adhesive and a water-dispersible type adhesive may be used. Here, from the viewpoint of enabling high-speed coating, being environmentally friendly, and having a small influence (swelling or dissolving) on the core material caused by the solvent, the water-dispersible adhesive is preferred.

In the threadlike adhesive body, it is preferable that a large amount of adhesive adheres to the core material, from the viewpoint of adhesive strength. Specifically, the adhered amount of the adhesive (the mass of the adhesive layer per unit length) is preferably 2 mg/m or more, more preferably 5 mg/m or more, and still more preferably 8 mg/m or more. On the other hand, when the adhered amount of the adhesive is excessive, it is necessary to apply the adhesive to the core material a plurality of times in the production process, or it takes time to dry the applied adhesive, resulting in a low production efficiency. In addition, it is difficult to improve the biomass degree. Therefore, the adhered amount of the adhesive is preferably 200 mg/m or less, more preferably 180 mg/m or less, and still more preferably 160 mg/m or less.

The threadlike adhesive body may be provided with a separator on a surface of the adhesive layer until the threadlike adhesive body is used, and the adhesive surface may be protected. However, the separator is discarded when the threadlike adhesive body is used, so that it is preferable that the separator is not provided from the viewpoint of reducing the environmental load.

The threadlike adhesive body can be stuck to a narrow member or a narrow region while being prevented from protruding, and is also preferably applied to a complex shape such as a curved line, a curved surface, and an uneven shape, and is also preferred in terms of easy disassembly (rework).

For example, the threadlike adhesive body can be suitably used for fixing an article during the production of an electronic device, and can be applied to fixing of a narrow frame of a mobile terminal such as a mobile phone or a smartphone.

For example, when an adhesive tape is stuck to an adherend having a part with a complicated shape such as a curved line, a curved surface, or an uneven shape, a wrinkle or overlapping may occur in the adhesive tape in such a part, and it is difficult to finely stick the adhesive tape while preventing a protrusion. The part where a wrinkle or overlapping occurs may cause a decrease in the adhesive strength. In order to stick the adhesive tape after preventing the occurrence of a wrinkle or overlapping, it is conceivable to stick the adhesive tape while finely cutting the adhesive tape. However, workability significantly deteriorates. On the other hand, the threadlike adhesive body can be firmly stuck without causing a wrinkle or overlapping even when being stuck to a part having a complicated shape such as a curved line, a curved surface, and an uneven shape. Further, since such a threadlike adhesive body can be stuck to a part to be stuck at one time, that is, in one step, the threadlike adhesive body is excellent in workability and can be applied to an automation line.

Specifically, the threadlike adhesive body can be suitably used, for example, for fixing cables such as electric wires and optical fibers, optical fiber sensors such as LED fiber light and Fiber Bragg Gratings (FBG), various wire members (linear members) such as a yarn, a string, and a wire, and narrow members, in a desired form. Even in a case where a wire member or a narrow member is fixed to another member in a complicated shape, the threadlike adhesive body can be firmly fixed with excellent workability while suppressing protrusion, wrinkles, and overlapping in accordance with the complicated shape that the wire member or the narrow member have. In a case where the wire member or the narrow member is fixed to another member, the threadlike adhesive body is stuck in advance in accordance with a form in which the wire member or the narrow member is to be fixed on a surface of the other member, and then, the wire member or the narrow member can be bonded and fixed in accordance with the threadlike adhesive body stuck to the surface of the other member. Alternatively, the threadlike adhesive body is stuck to a wire member or a narrow member, and then, the wire member or the narrow member may be fixed to another member in a desired form.

The threadlike adhesive body can also be suitably used for temporary fixing (temporary tacking) of an article for temporarily fixing (temporarily tacking) one article to a surface of another article. More specifically, the threadlike adhesive body can be used for temporary fixing (temporary tacking) during production process of, for example, fiber products and leather products such as clothes, shoes, bags, and hats. However, the application is not limited to this example, and the threadlike adhesive body is suitably used for various applications in which temporary fixing (temporary tacking) is desired.

For example, when one article is fixed to a surface of another article, the one article is temporarily fixed and positioned on the surface of the other article in advance using the threadlike adhesive body, and then both articles are fixed (finally fixed) by a fixing method such as thermocompression bonding and sewing. In this case, the threadlike adhesive body easily and temporarily fixes the two articles without a fixing portion provided between the two articles. For example, in a case where a fiber product or a leather product is sewn, when temporary fixing is performed using the threadlike adhesive body, the temporary fixing can be easily performed while avoiding a part to be sewed, and the adhesive can be easily prevented from adhering to a needle.

In addition, the threadlike adhesive body can be well stuck while preventing a protrusion, a wrinkle, and overlapping even when shapes of two articles are a complicated shape such as a curved line, a curved surface, and an uneven shape. Further, the threadlike adhesive body can be stuck in one step, and workability is good.

Even in a case of a member that is likely to be deformed, such as fabric, cloth, and leather that forms a fiber product or a leather product, temporary fixing can be performed using the threadlike adhesive body, so that deformation of the member due to tension can be prevented, and a design after fixing (final fixing) is improved.

Further, after two articles are fixed (finally fixed) using the threadlike adhesive body, the threadlike adhesive body can be pulled out and removed if necessary from the two articles that are fixed (finally fixed). In this case, the adhesive can be prevented from squeezing out, and deterioration of a design due to aging discoloration of the remaining adhesive can be satisfactorily prevented.

[Examples]

Hereinafter, the present invention will be described in detail with reference to Examples, but the present invention is not limited to these Examples.

<Production of Core Materials of Examples 1 to 4>

(Example 1)

48 filaments made of non-biomass-derived PET were bundled without being twisted to form a multifilament yarn (thickness: 280 dtex), and a core material of Example 1 was obtained.

(Example 2)

48 filaments made of non-biomass-derived PET were twisted at 150 twists/m and bundled to form a multifilament yarn (thickness: 280 dtex), and a core material of Example 2 was obtained.

(Example 3)

80 filaments made of biomass-derived nylon (nylon 610, biomass degree: about 60%) were bundled without being twisted to form a multifilament yarn (thickness: 264 dtex), and a core material of Example 3 was obtained.

(Example 4)

A cotton yarn of double yarns with 40 yarn count was used as a core material of Example 4.

<Evaluation of Core Material>

As shown in FIG. 2, two acrylic plates 3 each having a thickness of 2 cm were arranged side by side with a gap of 3 cm therebetween, and the core material 2 of each example was stretched straight in a manner of straddling the gap and stuck to upper surfaces of the acrylic plates with a tape 4. Next, 2 $\mu$l of water was dropped on the core material straddling the gap, and a contact angle $\theta_0$ of water immediately after dropping and a contact angle $\theta_{30}$ of water after 30 seconds had elapsed were measured using a contact angle meter (product name: "Drop Master" manufactured by Kyowa Interface Science Co., Ltd.), thereby calculating a contact angle difference ($\theta_0 - \theta_{30}$) between the contact angle $\theta_0$ and the contact angle $\theta_{30}$. The measurement results are shown in Table 1.

[Table 1]

|  | Material | Thickness | Number of filaments | Number of twists | $\theta_0$ [°] | $\theta_{30}$ [°] | $\theta_0 - \theta_{30}$ [°] |
|---|---|---|---|---|---|---|---|
| Example 1 | PET | 280 dtex | 48 | 0 | 67 | 57 | 10 |
| Example 2 | PET | 280 dtex | 48 | 150 twists/m | 65 | 64 | 1 |
| Example 3 | nylon | 264 dtex | 80 | 0 | 83 | 81 | 2 |
| Example 4 | cotton | 40S | Double yarn | Not measured | 80 | 57 | 23 |

It is considered that, in the core materials of Examples 1 and 2, $\theta_0 - \theta_{30}$ is small, and the adhesive hardly permeates. However, the core materials do not contain a biomass-derived component, and thus, it is impossible to obtain a threadlike adhesive body with a high biomass degree and a reduced environmental load even if these core materials are used. The core material of Example 2 was obtained by twisting the core material of Example 1, and it was confirmed that $\theta_0 - \theta_{30}$ was reduced by using twisted yarns when comparing these core materials.

The core material of Example 4 is a cotton yarn that is a natural fiber, and the biomass degree of the core material is high. However, it is considered that $\theta_0 - \theta_{30}$ is large and the adhesive is likely to permeate, and thus, it is impossible to obtain a threadlike adhesive body with a high biomass degree and a reduced environmental load if the core material is used.

Since the core material of Example 3 is made of biomass-derived nylon, it is considered that the biomass degree is high, $\theta_0 - \theta_{30}$ is small, and the adhesive hardly permeates. Therefore, it is considered that, when the core material of Example 3 is used, a threadlike adhesive body with a high biomass degree and a reduced environmental load can be obtained.

INDUSTRIAL APPLICABILITY

According to the present invention, a threadlike adhesive body with a reduced environmental load can be provided.

Although the present invention has been described in detail with reference to specific embodiments, it will be apparent to those skilled in the art that various changes and modifications can be made without departing from the spirit and the scope of the present invention.

The present application is based on Japanese Patent Application No. 2019-179184 filed on September 30, 2019, the contents of which are incorporated herein as reference.

REFERENCE SIGNS LIST

    10 Threadlike adhesive body
    1 Adhesive layer
    2 Core material
    3 Acrylic plate
    4 Tape

Claims

1. A threadlike adhesive body comprising:

    a threadlike core material and an adhesive layer configured to cover a surface of the core material in a longitudinal direction,
    wherein the adhesive layer contains a non-biomass-derived component,
    the core material contains a biomass-derived component, and
    a difference ($\theta_0 - \theta_{30}$) between a contact angle $\theta_0$ of water in an amount of 2 $\mu$l measured immediately after the water drops onto the core material and a contact angle $\theta_{30}$ of the water measured after 30 seconds have elapsed from the dropping is 20° or less.

2. The threadlike adhesive body according to claim 1, wherein the core material is a multifilament yarn.

3. The threadlike adhesive body according to claim 2, wherein the multifilament yarn contains a filament which does not contain a biomass-derived component.

4. The threadlike adhesive body according to claim 2 or 3, wherein the multifilament yarn is twisted.

# FIG. 1

# FIG. 2

## INTERNATIONAL SEARCH REPORT

| International application No. |
| --- |
| PCT/JP2020/036739 |

**A. CLASSIFICATION OF SUBJECT MATTER**
Int.Cl. C09J7/21(2018.01)i, C09J7/38(2018.01)i
FI: C09J7/38, C09J7/21

According to International Patent Classification (IPC) or to both national classification and IPC

**B. FIELDS SEARCHED**

Minimum documentation searched (classification system followed by classification symbols)
Int.Cl. C09J7/21, C09J7/38

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 3-231980 A (ISHIZAKI SHIZAI KK) 15 October 1991 (1991-10-15), claims, page 2, upper right column, lines 15-20, fig. 1 | 1<br>2-4 |
| Y<br>A | JP 2018-44139 A (IDEA GIKEN KK) 22 March 2018 (2018-03-22), claim 1 | 1-2, 4<br>3 |
| Y<br>A | WO 2015/056499 A1 (NITTO DENKO CORPORATION) 23 April 2015 (2015-04-23), claims 1-2, paragraph [0007] | 1-2, 4<br>3 |
| A | JP 48-55937 A (KANEGAFUCHI BOSEKI BABUSHIKI KAISHA) 06 August 1973 (1973-08-06), entire text, all drawings | 1-4 |
| A | JP 54-161650 A (TOKYO DENKI KAGAKU KOGYO KK) 21 December 1979 (1979-12-21), entire text, all drawings | 1-4 |

☒  Further documents are listed in the continuation of Box C.    ☒  See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 October 2020 | Date of mailing of the international search report<br>02 November 2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2020/036739 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 1-308471 A (NITTO DENKO CORPORATION) 13 December 1989 (1989-12-13), entire text, all drawings | 1-4 |
| A | JP 4-162508 A (SONY CHEMICALS CORPORATION) 08 June 1992 (1992-06-08), entire text, all drawings | 1-4 |
| A | WO 2019/065886 A1 (NITTO DENKO CORPORATION) 04 April 2019 (2019-04-04), entire text, all drawings | 1-4 |
| A | WO 2019/163788 A1 (NITTO DENKO CORPORATION) 29 August 2019 (2019-08-29), entire text, all drawings | 1-4 |

Form PCT/ISA/210 (second sheet) (January 2015)

**INTERNATIONAL SEARCH REPORT**
Information on patent family members

| International application No. |
| --- |
| PCT/JP2020/036739 |

| | | |
| --- | --- | --- |
| JP 3-231980 A | 15 October 1991 | (Family: none) |
| JP 2018-44139 A | 22 March 2018 | (Family: none) |
| WO 2015/056499 A1 | 23 April 2015 | (Family: none) |
| JP 48-55937 A | 06 August 1973 | (Family: none) |
| JP 54-161650 A | 21 December 1979 | (Family: none) |
| JP 1-308471 A | 13 December 1989 | (Family: none) |
| JP 4-162508 A | 08 June 1992 | (Family: none) |
| WO 2019/065886 A1 | 04 April 2019 | (Family: none) |
| WO 2019/163788 A1 | 29 August 2019 | (Family: none) |

Form PCT/ISA/210 (patent family annex) (January 2015)

**EP 4 039 762 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3231980 A
- JP 2019179184 A